(19) Europäisches Patentamt / European Patent Office / Office européen des brevets

(11) **EP 3 915 040 B1**

(12) **FASCICULE DE BREVET EUROPÉEN**

(45) Date de publication et mention de la délivrance du brevet:
**01.01.2025 Bulletin 2025/01**

(21) Numéro de dépôt: **20700298.1**

(22) Date de dépôt: **13.01.2020**

(51) Classification Internationale des Brevets (IPC):
*G06F 18/25* *(2023.01)* *G06V 20/58* *(2022.01)*

(52) Classification Coopérative des Brevets (CPC):
**G06V 20/58; G06F 18/251**

(86) Numéro de dépôt international:
**PCT/EP2020/050708**

(87) Numéro de publication internationale:
**WO 2020/151983 (30.07.2020 Gazette 2020/31)**

(54) **PROCÉDÉ DE DÉTERMINATION D'UN SCORE DE CONFIANCE D'UNE CIBLE D'UN ENVIRONNEMENT D'UN VÉHICULE**

VERFAHREN ZUR BESTIMMUNG EINES KONFIDENZSCORES FÜR EIN ZIEL IN DER UMGEBUNG EINES FAHRZEUGS

METHOD FOR DETERMINING A CONFIDENCE SCORE FOR A TARGET IN SURROUNDINGS OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2019 FR 1900484**

(43) Date de publication de la demande:
**01.12.2021 Bulletin 2021/48**

(73) Titulaire: **Ampere SAS**
**92100 Boulogne-Billancourt (FR)**

(72) Inventeur: **DEROME, Maxime**
**91420 Morangis (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2018 349 785   US-B1- 9 739 881**

• THIEMO ALLDIECK ET AL: "Context-Aware Fusion of RGB and Thermal Imagery for Traffic Monitoring", SENSORS, vol. 16, no. 11, 18 November 2016 (2016-11-18), pages 1947, XP055632346, DOI: 10.3390/s16111947

**Description**

L'invention concerne le domaine de la perception de l'environnement extérieur d'un véhicule.

La détection d'objets pertinents pour un véhicule, appelés cibles, est complexe. Une technologie de perception n'est pas suffisante pour obtenir des détections de cibles robustes et fiables. Il est connu d'utiliser un ou plusieurs capteurs de vision associés à des capteurs dont les principes physiques sont complémentaires et moins sensibles aux conditions de luminosité. On fait appel à des techniques de fusion de données pour améliorer la robustesse de la détection.

Les techniques de fusion connues prennent en compte les caractéristiques des capteurs, mais sans prendre en compte les impacts extérieurs sur ces capteurs, de manière suffisamment représentative.

Il est par exemple connu du document US2018349785A1 une méthode de perception in situ dans un véhicule à conduite autonome. Une pluralité de types de données de capteurs sont acquises en continu par une pluralité de types de capteurs déployés sur le véhicule, la pluralité de types de données de capteurs fournissant des informations sur l'environnement du véhicule. Un ou plusieurs éléments entourant le véhicule sont suivis, sur la base d'un modèle, à partir d'un premier type de données de capteurs de la pluralité de types de capteurs. Pour un élément suivi, la validation temporelle croisée est effectuée en obtenant une étiquette estimée pour l'élément, en récupérant les étiquettes précédentes correspondant à l'élément avec les horodatages précédents correspondants, et en attribuant l'étiquette estimée à l'élément si l'étiquette estimée est validée sur la base des étiquettes précédentes pour générer un élément étiqueté. Les éléments étiquetés doivent être utilisés pour générer des informations mises à jour par le modèle, qui sont ensuite utilisées pour mettre à jour le modèle.

Également du document Alldieck, Thiemo, Chris H. Bahnsen, and Thomas B. Moeslund. "Context-aware fusion of RGB and thermal imagery for traffic monitoring." Sensors 16.11 (2016), une approche pour fusionner les flux vidéo couleur RVB et thermiques en utilisant non seulement les informations des vidéos elles-mêmes, mais aussi les informations contextuelles disponibles d'une scène. Les informations contextuelles sont utilisées pour juger de la qualité d'une modalité particulière et guident la fusion de deux pipelines de segmentation parallèles des flux vidéo RVB et thermiques. Le potentiel de la fusion contextuelle proposée est démontré par des tests approfondis des caractéristiques quantitatives et qualitatives sur des ensembles de données vidéo existants et nouveaux, et comparé à des approches concurrentes de la fusion multimodale.

L'invention vise à résoudre les problèmes de l'état de la technique en proposant un procédé permettant d'attribuer à chaque cible détectée par le véhicule un score de confiance prenant en compte les caractéristiques intrinsèques des capteurs et l'environnement du véhicule.

L'invention porte sur un procédé de détermination d'un score de confiance d'une cible d'un environnement d'un véhicule, le véhicule comprenant un calculateur et une pluralité de capteurs aptes à détecter des cibles dudit environnement, le procédé comprenant les étapes suivantes :

- une étape de détection dans laquelle un capteur de la pluralité de capteurs détecte une cible à filer et dans laquelle le calculateur initialise un score de confiance de ladite cible à filer à une valeur prédéterminée,
- une étape d'acquisition dans laquelle un capteur de la pluralité de capteurs dit capteur actif, acquiert des données pour détecter des cibles de l'environnement et envoie au calculateur des informations de détection associées aux cibles détectées, une absence d'envoi d'éléments sur la cible à filer correspondant à une information de non détection de la cible à filer,
- une étape de pondération dans laquelle le calculateur attribue à la cible à filer un coefficient de pondération, en fonction de la détection ou de la non détection de la cible à filer par le capteur actif, pondéré en fonction de caractéristiques intrinsèques du capteur actif et de l'environnement du véhicule,
- une étape de cotation dans laquelle le calculateur actualise le score de confiance de la cible à filer en fonction du coefficient de pondération précédemment attribué.

Selon un aspect de l'invention, les caractéristiques intrinsèques du capteur actif comprennent le type du capteur, un champ d'action du capteur.

Selon un aspect de l'invention, l'environnement du véhicule comprend d'autres cibles dites cibles obstacles, des objets de l'infrastructure d'une voie de circulation du véhicule, des végétaux.

Selon un aspect de l'invention, le coefficient de pondération est en outre pondéré, dans l'étape de pondération, en fonction des conditions atmosphériques comprenant des conditions météorologiques et une luminosité.

Selon un aspect de l'invention, le coefficient de pondération est en outre pondéré, dans l'étape de pondération, en fonction de propriétés de la cible à filer comprenant une couleur, une distance au capteur actif, une localisation par rapport au capteur actif, une classe, une taille.

Selon un aspect de l'invention, le score de confiance de la cible étant actualisé dans l'étape de cotation en y additionnant le coefficient de pondération précédemment attribué.

Selon un aspect de l'invention, les étapes d'acquisition, de pondération et de cotation sont répétées dans le temps pour tous les capteurs aptes à détecter des cibles dudit environnement, le score de confiance de la cible à filer étant actualisé à chaque étape de cotation en fonction du coefficient de pondération de la cible associée au capteur actif.

Selon un aspect de l'invention, le coefficient de pondération de la cible est fonction d'une probabilité de détection de la cible à filer et d'une probabilité de fausse détection de la cible à filer.

Selon un aspect de l'invention, le coefficient de pondération de la cible à filer est un bonus supérieur ou égal à un seuil prédéterminé en cas de détection de la cible à filer par le capteur actif, le coefficient de pondération de la cible à filer étant un malus inférieur ou égal au seuil prédéterminé en cas de non détection de la cible à filer par le capteur actif.

Selon un aspect de l'invention, le coefficient de pondération de la cible à filer est égal au seuil prédéterminé en cas de non détection de la cible à filer par le capteur actif, ladite non détection étant prévisible par le calculateur, en fonction de caractéristiques intrinsèques du capteur actif et de l'environnement du véhicule.

L'invention concerne également un produit programme d'ordinateur comprenant les instructions de programme mettant en oeuvre au moins une étape du procédé, lorsque les instructions de programme sont exécutées par un ordinateur.

D'autres avantages et caractéristiques de l'invention apparaîtront à la lecture de la description et des dessins.

La figure 1 représente schématiquement un véhicule dans un environnement comprenant des cibles.

La figure 2 illustre les étapes du procédé selon l'invention.

La figure 3 illustre la pondération de la probabilité de détection d'une cible en fonction de la localisation de la cible dans un champ d'action de capteur.

La figure 4a illustre une étape de pondération du procédé pour une première cible.

La figure 4b illustre une étape de pondération du procédé pour une deuxième cible.

La figure 4c illustre une étape de cotation du procédé.

La figure 5 illustre l'évolution d'un score de confiance de deux cibles dans le temps.

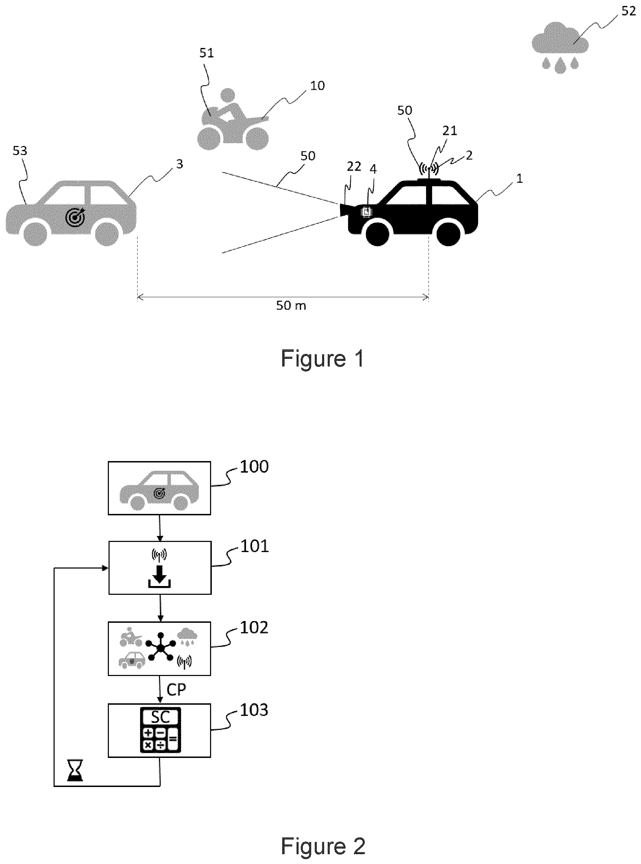

La figure 1 représente un véhicule 1 comprenant une pluralité de capteurs 21, 22 aptes à détecter des cibles 3, 10 d'un environnement 51 du véhicule 1, et un calculateur 4.

Le capteur 21 est par exemple un lidar.

Le capteur 22 est par exemple une caméra frontale.

Le capteur 21 est dit « capteur actif » 2 parce qu'il est en train d'acquérir des données pour détecter des cibles 3, 10 de l'environnement.

Les capteurs 21, 22 ont des caractéristiques intrinsèques 50 comprenant notamment un champ de vision comme représenté sur la figure 1.

De manière plus générale, les caractéristiques intrinsèques 50 d'un capteur 21, 22 comprennent le type du capteur, le champ de vision du capteur.

Le type du capteur comprend un lidar, une caméra synchrone, une caméra asynchrone, un radar.

Le champ d'action du capteur comprend un angle d'action, une portée latérale, une portée frontale, un rayon d'action, un diamètre d'action.

Les caractéristiques intrinsèques 50 d'un capteur 21, 22 peuvent être :

- fournies par le fournisseur du capteur 21, 22,
- caractérisées par simulation,
- déterminées par des tests représentatifs d'une réalité de terrain.

Des tests représentatifs d'une réalité de terrain sont réalisés par exemple avec un véhicule test, dans un environnement représentatif d'une utilisation finale, selon des scénarios appropriés et réalistes vis-à-vis de l'utilisation finale.

Une cible 3, 10 est un objet une personne ou un animal qui présente un intérêt pour le véhicule 1. Une cible 3, 10 comprend une automobile, un vélo, une moto, un piéton, un animal, un panneau de signalisation, un feu de circulation, un végétal.

Une cible 3, 10 a des propriétés 53 comprenant :

- une couleur par exemple, noir, gris ou blanc et/ou un degré d'intensité de la couleur par exemple sombre, moyen ou clair,

- une distance au véhicule 1,
- une localisation par rapport au capteur actif 2 et plus particulièrement une localisation dans le champ d'action du capteur actif 2,
- une localisation par rapport à l'environnement du véhicule 1, par exemple par rapport à une barrière ou une cible obstacle 10,
- une classe, telle que piéton, véhicule, véhicule à deux roues, automobile, camion, panneau de signalisation, feu de circulation,
- une taille, relative ou absolue, dimensionnelle par exemple en mètres, ou catégorisée telle que petite, moyenne, grande,
- une vitesse relative par rapport au véhicule 1 ou par rapport à une cible obstacle 10.

Les propriétés 53 d'une cible peuvent être déterminées par les capteurs 21, 22 aptes à détecter des cibles de l'environnement, en association ou non avec d'autres capteurs ou une banque de donnée de cibles connues, accessible par le calculateur 4.

Sur la figure 1, le véhicule 1 détecte une cible à filer 3 dans un environnement 51 comprenant une cible obstacle 10.

La cible à filer 3 est une automobile, la cible obstacle 10 est une moto.

La cible à filer 3 a des propriétés 53 qui sont une couleur grise, une classe automobile, une taille berline, une distance au capteur actif 2 égale à cinquante mètres.

Sur la figure 1, l'environnement 51 du véhicule 1 comprend la cible obstacle 10.

De manière générale, l'environnement 51 du véhicule 1 comprend :

- des cibles obstacle 10,
- des objets de l'infrastructure d'une voie de circulation du véhicule tels que des barrières, murs ou murets de délimitation de voie de circulation,
- des végétaux tels que des haies, des arbres,
- des ponts.

L'environnement 51 du véhicule 1 peut être détecté par les capteurs 21, 22 aptes à détecter des cibles 3, 10 de l'environnement. L'environnement 51 du véhicule 1 peut également être fourni au calculateur 4 par un module cartographique intégré ou non au véhicule 1.

Les conditions atmosphériques 52 de la scène représentée à la figure 1 comprennent une météo nuageuse, avec pluie.

De manière plus générale, les conditions atmosphériques 52 comprennent :

- les conditions météorologiques telle que la pluie, le brouillard, la neige, la température,
- la luminosité ou l'éclairage qui peut être détectée par un capteur de luminosité ou en fonction de l'heure, d'une date et de coordonnées de géolocalisation.

Les conditions atmosphériques 52 peuvent être détectés par les capteurs 21, 22 aptes à détecter des cibles 3, 10 de l'environnement, par exemple une caméra synchrone, ou par des capteurs dédiés, tels qu'un capteur de pluie ou de luminosité.

Le calculateur 4 est apte à déterminer un score de confiance SC de la cible à filer 3.

La figure 2 illustre les étapes d'un procédé de détermination du score de confiance SC qui sont :

- une étape de détection 100 dans laquelle un capteur de la pluralité de capteurs 21, 22 détecte une cible à filer 3 et dans laquelle le calculateur 4 initialise un score de confiance SC de ladite cible à filer 3 à une valeur prédéterminée,
- une étape d'acquisition 101 dans laquelle un capteur de la pluralité de capteurs 21, 22 dit capteur actif 2, acquiert des données pour détecter des cibles 3,10 de l'environnement et envoie au calculateur 4 des informations de détection associées aux cibles détectées, une absence d'envoi d'éléments sur la cible à filer 3 correspondant à une information de non détection de la cible à filer 3,
- une étape de pondération 102 dans laquelle le calculateur 4 attribue à la cible à filer 3 un coefficient de pondération CP, en fonction de la détection ou de la non détection de la cible à filer 3 par le capteur actif 2, pondéré en fonction de caractéristiques intrinsèques 50 du capteur actif 2 et d'au moins un parmi l'environnement 51 du véhicule 1, des conditions atmosphériques 52, des propriétés 53 de la cible à filer 3,
- une étape de cotation 103 dans laquelle le calculateur 4 actualise le score de confiance SC de la cible à filer 3 en fonction du coefficient de pondération CP précédemment attribué.

L'invention comprend deux modes de réalisation et pour chaque mode de réalisation, l'étape de détection 100 peut être réalisée selon deux alternatives.

Dans l'étape de détection 100, un capteur de la pluralité de capteurs 21, 22 détecte une cible à filer 3. Avantageusement, ledit capteur envoie des informations initiales associées à ladite cible à filer 3, au calculateur 4 qui les mémorise.

Par exemple, à l'activation des systèmes à la conduite, les capteurs 21, 22 acquièrent des données de manière périodique, ou sur détection de mouvement ou de changement de luminosité. Le premier capteur à acquérir des données après activation des systèmes de conduite, par exemple le capteur 22 qui est une caméra, détecte une première cible à filer 3.

Selon un autre exemple, pendant le roulage, un capteur, par exemple le capteur 22 qui est une caméra, acquiert des données et détecte une nouvelle cible à filer 3, qu'aucun capteur 21, 22 n'avait encore détectée.

Le calculateur 4 initialise un score de confiance SC de ladite cible à filer 3 à une valeur prédéterminée. La valeur prédéterminée du score de confiance SC à l'initialisation peut être figée et absolue, par exemple égale à zéro ou un, ou bien dépendante d'une probabilité de détection PD de la cible à filer 3 et d'une probabilité de fausse détection PFA de la cible à filer 3.

Selon la première alternative de l'étape de détection 100, le calculateur 4 initialise le score de confiance SC à une valeur prédéterminée égale à une valeur seuil TH, figée, par exemple zéro ou un, selon le mode de réalisation.

Selon la deuxième alternative de l'étape de détection 100 et quel que soit le mode de réalisation, le calculateur 4 initialise le score de confiance SC à une valeur prédéterminée égale à une valeur de bonus BS, supérieure ou égale à la valeur seuil TH, avantageusement fonction d'une probabilité de détection PD de la cible à filer 3 et d'une probabilité de fausse détection PFA de la cible à filer 3, la valeur de bonus BS étant déterminée en fonction de caractéristiques intrinsèques 50 du capteur ayant détecté la première cible à filer 3 ou la nouvelle cible à filer 3, et d'au moins un parmi :

- l'environnement 51 du véhicule 1,
- des conditions atmosphériques 52,
- des propriétés 53 de la cible à filer 3.

Selon le premier mode de réalisation de l'invention, le seuil prédéterminé TH est égal à zéro.

Avantageusement, la valeur de bonus BS est égal au logarithme népérien du quotient de la probabilité de détection PD de la cible à filer 3 par la probabilité de fausse détection PFA de la cible à filer 3.

$$BS = \ln(PD/PFA)$$

Avantageusement, la valeur de bonus BS est arrondie à l'entier le plus proche.

Selon le deuxième mode de réalisation de l'invention, le seuil prédéterminé TH est égal à un.

La manière de calculer la valeur de bonus BS selon ce deuxième mode de réalisation est évoquée plus loin dans la description, dans la partie concernant l'étape de pondération 102.

Dans l'étape d'acquisition 101, et quel que soit le mode de réalisation de l'invention, un capteur quelconque de la pluralité de capteurs 21, 22 dit capteur actif 2, acquiert des données pour détecter des cibles 3,10 de l'environnement. Avantageusement, ledit capteur actif 2 envoie des informations associées aux cibles détectées et notamment des informations de détection ou non détection de la cible à filer 3, au calculateur 4 qui les enregistre. Par une absence d'envoi d'éléments sur la cible à filer 3, la capteur actif 2 envoie des informations de non détection de la cible à filer 3.

Dans l'étape d'acquisition 101, ledit capteur actif 2 envoie également avantageusement des informations associées aux cibles obstacles 10 détectées. Avantageusement, ledit capteur actif 2 envoie des informations associées à toutes les cibles détectées. Le calculateur 4, en fonction des informations initiales de la cible à filer 3 mémorisées, en déduit les informations de détection et de non détection de ladite cible à filer 3 et les informations des cibles obstacles 10. En effet, si le capteur actif 2 n'envoie pas d'information associée à une cible, c'est qu'il ne l'a pas détectée, c'est une non-détection. Un capteur ne détecte une cible par exemple parce-que les conditions météorologiques telles qu'un brouillard épais ne lui permettent pas de la détecter, ou parce-que la cible est obstruée par un obstacle, ou parce-que la luminosité est trop faible, ou encore parce-que la cible est de couleur sombre.

Les informations de détection ou non détection de la cible à filer 3 envoyées par le capteur actif 2 au calculateur 4, sont des informations ne prenant pas en compte de précédentes acquisitions de données faites par ledit capteur actif 2. En particulier le capteur actif 2 n'effectue pas de suivi de la cible à filer 3, ni ne fait de prédiction de localisation d'une cible à filer 3. Les informations de détection ou non détection de la cible à filer 3 envoyées au calculateur 4 par le capteur actif 2 reflètent les données acquises uniquement pendant l'étape d'acquisition 101 en cours, par le capteur actif 2.

Si une stratégie de suivi de la cible à filer 3 ou de prédiction de trajectoire est effectuée, une telle stratégie est mise en oeuvre par le calculateur 4. En effet, il est plus efficace que ce soit le calculateur 4 seul qui effectue une telle stratégie de suivi ou de prédiction, car il dispose des informations de tous les capteurs 21, 22 aptes à détecter des cibles 3,10. Si le capteur actif 2 prend lui aussi en compte une telle stratégie, il y a un risque de propager une erreur de fausse détection ou non détection, le score de confiance SC est affecté.

Selon l'exemple de la figure 1, le capteur actif 2 est le capteur 21 qui est un lidar.

Deux cas sont alors possibles. Dans un premier cas, le capteur actif 2 détecte la cible à filer 3. Dans le second cas, le capteur actif ne détecte pas la cible à filer 3.

Le calculateur 4 est apte à différencier ces deux cas puisqu'il a précédemment mémorisé les informations initiales associées à la cible à filer 3.

Dans l'étape de pondération 102, quel que soit le mode de réalisation de l'invention, le calculateur 4 attribue à la cible à filer 3 un coefficient de pondération CP, en fonction de la détection ou de la non détection de la cible à filer 3 par le capteur actif 2, pondéré en fonction de caractéristiques intrinsèques 50 du capteur actif 2 et d'au moins un parmi :

- l'environnement 51 du véhicule 1,
- des conditions atmosphériques 52,
- des propriétés 53 de la cible à filer 3.

Avantageusement, le coefficient de pondération CP de la cible à filer 3 est fonction d'une probabilité de détection PD de la cible à filer 3 et d'une probabilité de fausse détection PFA de la cible à filer 3.

Le coefficient de pondération CP de la cible à filer 3 est le résultat d'une fonction mathématique logistique, en particulier d'une réciproque de sigmoïde.

En cas de détection de la cible à filer 3 par le capteur actif 2, le coefficient de pondération CP de la cible à filer 3 est un bonus BS supérieur ou égal au seuil prédéterminé TH.

Selon le premier mode de réalisation de l'invention, le seuil prédéterminé TH est égal à zéro.

Le bonus BS est avantageusement égal au logarithme népérien du quotient de la probabilité de détection PD de la cible à filer 3 par la probabilité de fausse détection PFA de la cible à filer 3.

$$BS=ln\ (PD/PFA)$$

Avantageusement, le bonus BS est arrondi au nombre entier le plus proche.

En cas de non détection de la cible 3 par le capteur actif 2, le coefficient de pondération CP de la cible à filer 2 est un malus MS inférieur ou égal au seuil prédéterminé TH.

Le malus MS est égal au logarithme népérien du quotient de la probabilité de détection PD de la cible 3 retranchée de un, par la probabilité de fausse détection PFA de la cible 3 retranchée de un.

$$MS=ln\ ((1-PD)/(1-PFA))$$

Avantageusement, le malus MS est arrondi au nombre entier le plus proche.

Avantageusement, au moins la probabilité de détection PD de la cible à filer 3 ou la probabilité de fausse détection PFA de la cible à filer 3, est pondérée en fonction des caractéristiques intrinsèques 50 du capteur actif 2 et d'au moins un parmi :

- l'environnement 51 du véhicule 1,
- des conditions atmosphériques 52,
- des propriétés 53 de la cible à filer 3.

Les exemples illustrés par les tableaux qui suivent concernent le premier mode de réalisation. A ce titre, TH=0, BS=ln (PD/PFA) et MS=ln ((1-PD)/(1-PFA))

Quelques exemples de pondération de la probabilité de détection PD de la cible à filer 3 et de la probabilité de fausse détection PFA de la cible à filer 3 sont donnés dans le tableau 1 ci-dessous pour illustration, pour un capteur actif 2 dont le type du capteur est une caméra.

Tableau 1 :

| Type du capteur actif 2 | Environnement 51 du véhicule 1, ou/et conditions atmosphériques 52, ou/et propriétés 53 de la cible à filer 3. | PD | PFA | BS | MS |
|---|---|---|---|---|---|
| Caméra | Standard, par défaut | 90% | 5% | 3 | -2 |
| Caméra | - La cible à filer 3 est un piéton ou un deux-roues | 45% | 5% | 2 | -1 |

(suite)

| Type du capteur actif 2 | Environnement 51 du véhicule 1, ou/et conditions atmosphériques 52, ou/et propriétés 53 de la cible à filer 3. | PD | PFA | BS | MS |
|---|---|---|---|---|---|
| | - Distance de la cible à filer 3 au capteur actif 2 > 80 m | | | | |
| Caméra | - Pluie forte | 45% | 5% | 2 | -1 |
| Caméra | - La cible à filer 3 est un piéton ou un deux-roues<br>- Distance de la cible à filer 3 au capteur actif 2 > 80 m<br>- Pluie forte | 30% | 5% | 2 | 0 |
| Caméra | - La cible à filer 3 est un piéton ou un deux-roues<br>- Distance de la cible à filer 3 au capteur actif 2 > 80 m<br>- Luminosité faible (nuit) ou surexposition (sortie de tunnel) | 25% | 5% | 2 | 0 |
| Caméra | - La cible à filer 3 est localisée en limite du champ d'action du capteur actif 2 (moins de 2m entre la cible et la limite) | 70% | 5% | 3 | -1 |

Comme indiqué dans le tableau 1, par défaut, pour une caméra, la probabilité de détection PD d'une cible à filer 3 est égale à 90%, la probabilité de fausse détection PFA d'une cible à filer 3 est égale à 5%. Ainsi, lorsqu'une cible à filer 3 est détectée par un capteur actif 2 suite à une acquisition de données dudit capteur actif 2, le calculateur 4 attribue à la cible à filer 3 un coefficient de pondération CP égal à un bonus BS de 3. Lorsque la cible à filer 3 est n'est pas détectée par le capteur actif 2 suite à une acquisition de données dudit capteur actif 2, le calculateur 4 attribue à la cible à filer 3 un coefficient de pondération CP égal à un malus MS de -2.

Lorsque selon les propriétés 53 de la cible à filer 3, la cible à filer 3 est de classe piéton ou deux-roues et que la distance entre la cible à filer 3 et la capteur actif 2 est supérieure à 80 m, la probabilité de détection PD de la cible à filer 3 est divisée par deux, soit 45%. En conséquence, le bonus BS associé est abaissé à 2 et le malus MS associé devient égal à -1. Une cible de petite taille située au-delà de la moitié de la distance d'action d'une caméra est plus difficile à détecter qu'une cible plus proche de la caméra et/ou plus grande.

De même, lorsque selon les conditions atmosphériques 52, une pluie forte est détectée, par exemple par un capteur de pluie ou par une caméra, la probabilité de détection PD de la cible à filer 3 est divisée par deux, soit 45%. Une pluie forte rend la détection de cibles difficile pour une caméra.

Lorsque, selon les propriétés 53 de la cible à filer 3, la cible à filer 3 est de classe piéton ou deux-roues, la distance entre la cible à filer 3 et le capteur actif 2 est supérieure à 80 m, et que de surcroit, selon les conditions atmosphériques 52, une pluie forte est détectée, alors la probabilité de détection PD de la cible à filer 3 est encore abaissée à 30%. En conséquence, le malus MS associé devient nul.

Lorsque selon les propriétés 53 de la cible à filer 3, la cible à filer 3 est de classe piéton ou deux-roues, et que selon les conditions atmosphériques 52, une très faible ou très forte luminosité est détectée, alors la probabilité de détection PD de la cible à filer 3 est abaissée à 25%. En conséquence, le malus MS associé devient nul. Une surexposition ou une sous-exposition à la lumière de la caméra dégrade les détections de cibles.

Lorsque, selon les propriétés 53 de la cible à filer 3, associée aux caractéristiques intrinsèques du capteur actif 2, la cible à filer 3 est localisée à moins de deux mètres de la limite du champ d'action du capteur actif 2, alors la probabilité de détection PD de la cible à filer 3 est fixée à 70%. En conséquence, le bonus BS associé devient égal à 3 et le malus MS associé devient égal à -1. Une cible proche du champ d'action de la caméra peut ne pas être détectée entièrement par ladite caméra.

Selon des conditions atmosphériques 52 défavorables et/ou en fonction des propriétés 53 de la cible à filer 3, les bonus CS et malus MS sont abaissés, en valeur absolue. Cela permet de diminuer l'impact sur le calcul du score de confiance SC de la cible à filer 3 qui est actualisé dans l'étape de cotation 103 à suivre.

Quelques exemples de pondération de la probabilité de détection PD de la cible à filer 3 et de la probabilité de fausse détection PFA de la cible à filer 3 sont donnés dans le tableau 2 ci-dessous pour illustration, pour un capteur actif 2 dont le type du capteur est un radar.

Tableau 2 :

| Type du capteur actif 2 | Environnement 51 du véhicule 1, ou/et conditions atmosphériques 52, ou/et propriétés 53 de la cible à filer 3. | PD | PFA | BS | MS |
|---|---|---|---|---|---|
| Radar | Standard, par défaut | 99% | 35% | 1 | -4 |
| Radar | - La cible à filer 3 est un piéton | 70% | 35% | 1 | -1 |
| Radar | - La cible à filer 3 est localisée en limite du champ d'action du capteur actif 2 (moins de 2m entre la cible et la limite) | 70% | 35% | 1 | -1 |
| Radar | - Distance de la cible à filer 3 au capteur actif 2 < 10 m | 99% | 75% | 0 | -3 |
| Radar | - La cible à filer 3 est à proximité d'une barrière et n'est pas localisé du côté de la voie de circulation du véhicule 1<br><br>- Une cible obstacle 10 est présente en symétrie de l'autre côté de la barrière | 99% | 75% | 0 | -3 |

Comme indiqué dans le tableau 2, par défaut, pour un radar, la probabilité de détection PD d'une cible à filer 3 est égale à 99%, la probabilité de fausse détection PFA d'une cible à filer 3 est égale à 35%. Ainsi, lorsqu'une cible à filer 3 est détectée par un capteur actif 2 suite à une acquisition de données dudit capteur actif 2, le calculateur 4 attribue à la cible à filer 3 un coefficient de pondération CP égal à un bonus BS de 1. Lorsque la cible à filer 3 est n'est pas détectée par le capteur actif 2 suite à une acquisition de données dudit capteur actif 2, le calculateur 4 attribue à la cible à filer 3 un coefficient de pondération CP égal à un malus MS de -4.

Lorsque, selon les propriétés 53 de la cible à filer 3, la cible à filer 3 est de classe piéton, la probabilité de détection PD de la cible à filer 3 est abaissée à 70%. En conséquence, le malus MS associé devient égal à -1. Un piéton est difficile à détecter pour un radar parce qu'il s'agit d'une cible de taille réduite et qui n'est pas constituée d'un matériau particulièrement réfléchissant pour les ondes émises par un radar, au contraire d'un véhicule dont la taille plus grande, la surface métallique permettant en outre une détection plus facile.

De même, lorsque selon les propriétés 53 de la cible à filer 3, associée aux caractéristiques intrinsèques du capteur actif 2, la cible à filer 3 est localisée à moins de deux mètres de la limite du champ d'action du capteur actif 2, alors la probabilité de détection PD de la cible à filer 3 est abaissée à 70%, ce qui correspond à un malus MS associé égal à -1. Une cible proche d'une limite de champ d'action d'un radar est difficile à détecter par un radar parce-que le rapport signal sur bruit est mauvais en limite de champ d'action du radar.

Lorsque, selon les propriétés 53 de la cible à filer 3, la distance entre la cible à filer 3 et la capteur actif 2 est inférieur à 10 m, alors la probabilité de fausse détection PFA de la cible à filer 3 est augmentée à 75%. En conséquence, le bonus BS associé devient nul, le malus MS devient égal à -3. Une cible trop proche d'un radar est généralement détectée en même temps que de nombreuses fausses détections autour d'elle, qui sont dues aux ondes radar qui se réfléchissent à de multiples reprises entre la cible et la voiture dotée dudit radar.

De même, lorsque, selon l'environnement 51 du véhicule 1, une barrière et une cible obstacle 10 sont détectées et que selon les propriétés 53 de la cible à filer 3, la cible à filer 3 est à proximité de la barrière et n'est pas localisé du côté de la voie de circulation du véhicule 1 et que la cible obstacle 10 est présente en symétrie de l'autre côté de la barrière, alors la probabilité de fausse détection PFA de la cible à filer 3 est augmentée à 75%. En effet, il est fort probable que la cible à filer 3 détectée par le capteur actif 2 qui est un radar, correspond à un artefact, la cible à filer 3 étant une réflexion de la cible obstacle 10 sur la barrière.

Ces exemples illustrent l'ajustement du bonus BS et du malus MS pour diminuer l'impact sur le calcul du score de confiance SC de la cible à filer 3 qui est actualisé dans l'étape de cotation 103 à suivre.

Quelques exemples de pondération de la probabilité de détection PD de la cible à filer 3 et de la probabilité de fausse détection PFA de la cible à filer 3 sont donnés dans le tableau 3 ci-dessous pour illustration, pour un capteur actif 2 dont le type du capteur est un lidar.

Tableau 3 :

| Type du capteur actif 2 | Environnement 51 du véhicule 1, ou/et conditions atmosphériques 52, ou/et propriétés 53 de la cible à filer 3. | PD | PFA | BS | MS |
|---|---|---|---|---|---|
| Lidar | Standard, par défaut | 90% | 5% | 3 | -2 |
| Lidar | - La cible à filer 3 est un piéton ou un deux-roues | 45% | 5% | 2 | -1 |

(suite)

| Type du capteur actif 2 | Environnement 51 du véhicule 1, ou/et conditions atmosphériques 52, ou/et propriétés 53 de la cible à filer 3. | PD | PFA | BS | MS |
|---|---|---|---|---|---|
| | - Distance de la cible à filer 3 au capteur actif 2 > 80 m | | | | |
| Lidar | - Fortes chutes de neige ou brouillard épais | 30% | 5% | 2 | 0 |
| Lidar | - La cible à filer 3 est localisée en limite du champ d'action du capteur actif 2 (moins de 2m entre la cible et la limite) | 70% | 5% | 3 | -1 |
| Lidar | - La cible à filer 3 est de couleur noire | 30% | 5% | 2 | 0 |

Comme indiqué dans le tableau 1, par défaut, pour un lidar, la probabilité de détection PD d'une cible à filer 3 est égale à 90%, la probabilité de fausse détection PFA d'une cible à filer 3 est égale à 5%. Ainsi, lorsqu'une cible à filer 3 est détectée par un capteur actif 2 suite à une acquisition de données dudit capteur actif 2, le calculateur 4 attribue à la cible à filer 3 un coefficient de pondération CP égal à un bonus BS de 3. Lorsque la cible à filer 3 est n'est pas détectée par le capteur actif 2 suite à une acquisition de données dudit capteur actif 2, le calculateur 4 attribue à la cible à filer 3 un coefficient de pondération CP égal à un malus MS de -2.

Lorsque selon les propriétés 53 de la cible à filer 3, la cible à filer 3 est de classe piéton ou deux-roues et que la distance entre la cible à filer 3 et la capteur actif 2 est supérieur à 80 m, la probabilité de détection PD de la cible à filer 3 est divisée par deux, soit 45%. En conséquence, le bonus BS associé est abaissé à 2 et le malus MS associé devient égal à -1. Un lidar est plus efficace à courte portée car la cible est percutée par un plus grand faisceau de rayons qu'à une grande distance.

De même, lorsque selon les conditions atmosphériques 52, de fortes chutes de neiges ou un brouillard épais sont détectés, par exemple par une caméra, la probabilité de détection PD de la cible à filer 3 est abaissée à 30%. En conséquence, le malus MS associé devient nul, le bonus BS est abaissé à 2. Les Lidars sont sensibles aux conditions atmosphériques. Ainsi par temps de pluie ou de brouillard, le faisceau émis par le lidar peut être perturbé, à cause du principe de réfraction : lorsque le rayon d'un lidar traverse un milieu différent (comme une goutte d'eau), la vitesse de l'onde change, et ainsi la superposition de différente couche de différents milieux rend approximatif l'évaluation de la distance.

Lorsque, selon les propriétés 53 de la cible à filer 3, associée aux caractéristiques intrinsèques du capteur actif 2, la cible à filer 3 est localisée à moins de deux mètres de la limite du champ d'action du capteur actif 2, alors la probabilité de détection PD de la cible à filer 3 est fixée à 70%. En conséquence, le bonus BS associé reste égal à 3 et le malus MS associé devient égal à -1. Une cible proche du champ d'action du lidar peut ne pas être détectée entièrement par ledit lidar.

Lorsque selon les propriétés 53 de la cible à filer 3, la cible à filer 3 est de couleur noire, la probabilité de détection PD de la cible à filer 3 est abaissée à 30%. En conséquence, le bonus BS associé est abaissé à 2 et le malus MS associé devient nul. Une cible de couleur noire est difficile à détecter par un lidar car l'onde émise par le lidar est une onde proche de l'infra-rouge, qui est absorbée par le noir. La couleur de la cible à filer 3 a été préalablement déterminée par exemple par une caméra. Le calculateur 4 a en mémoire la couleur de la cible à filer 3 lorsqu'il attribue à la cible à filer 3 un coefficient de pondération CP dans l'étape de pondération 102.

Selon des conditions atmosphériques 52 défavorables et/ou en fonction des propriétés 53 de la cible à filer 3, les bonus CS et malus MS sont abaissés, en valeur absolue. Cela permet de diminuer l'impact sur le calcul du score de confiance SC de la cible à filer 3 qui est actualisé dans l'étape de cotation 103 à suivre.

Les tableaux de pondération ci-dessus sont des exemples de pondération de la probabilité de détection PD de la cible à filer 3 et de la probabilité de fausse détection PFA de la cible à filer 3, selon quelques scénarios. Les scénarios ne sont pas limitatifs, les valeurs attribuées à la probabilité de détection PD et à la probabilité de fausse détection PFA ne sont pas limitatives. Ces tableaux sont des exemples de valeurs typiques que l'on peut attribuer à la probabilité de détection PD et à la probabilité de fausse détection PFA dans l'exécution d'un procédé de détermination d'un score de confiance SC d'une cible d'un environnement, donnant de meilleurs résultats que l'état de la technique. Cependant, il est nécessaire d'ajuster ces valeurs en fonction de résultats de simulation et/ou de validations dans un environnement réel et représentatif, avec un véhicule test.

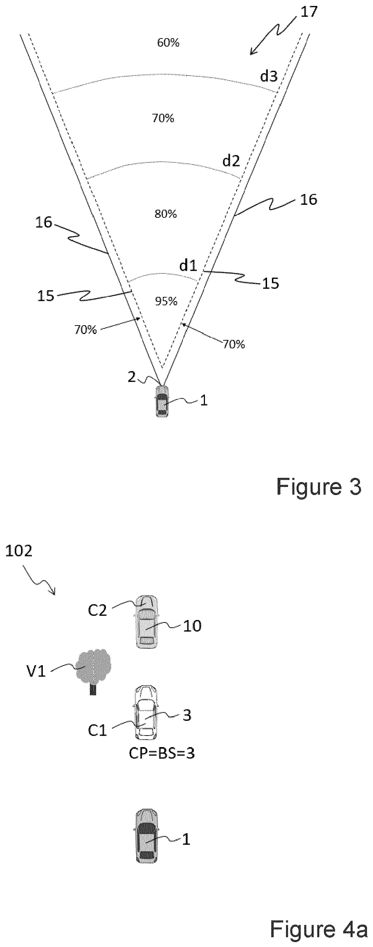

La figure 3 illustre un autre exemple de pondération de la probabilité de détection PD d'une cible en fonction de la localisation de la cible dans le champ d'action 17 d'un capteur actif 2. Sur un couloir 15, par exemple de deux mètres, en limite 16 du champ d'action 17 du capteur actif 2, la probabilité de détection PD d'une cible est de 70%. Jusqu'à une distance d1 du capteur actif 2, par exemple 40 mètres, la probabilité de détection PD d'une cible est de 65%. Au-delà de la distance d1 et jusqu'à une distance d2 du capteur actif 2, par exemple 70 mètres, la probabilité de détection PD d'une cible est de 80%. Au-delà de la distance d2 et jusqu'à une distance d3 du capteur actif 2, par exemple 100 mètres, la probabilité de détection PD d'une cible est de 70%. Au-delà de la distance d1 du capteur actif 2, la probabilité de détection PD d'une cible est de 60%.

Selon un autre exemple non représenté, la variation de la probabilité de détection PD d'une cible est linéaire en fonction de la distance de la cible au capteur actif 2, dans le champ d'action 17 du capteur actif 2.

Dans le deuxième mode de réalisation, le seuil prédéterminé TH est égal à un.

En cas de détection de la cible à filer 3 par le capteur actif 2, le coefficient de pondération CP de la cible à filer 3 est un bonus BS supérieur ou égal à un. En cas de non détection de la cible 3 par le capteur actif 2, le coefficient de pondération CP de la cible à filer 2 est un malus MS inférieur ou égal à un.

Le calculateur 4 éloigne plus ou moins le coefficient de pondération CP du chiffre un, pour augmenter ou diminuer l'impact sur le score de confiance SC qui est actualisé dans l'étape de cotation 103 qui suit ladite étape de pondération 102.

Les exemples de pondération des malus MS et bonus BS sont donnés pour le premier mode de réalisation mais l'homme du métier saura adapter les pondérations des malus MS et bonus BS, pour le deuxième mode de réalisation, par exemple en conservant un impact sur le score de confiance SC proportionnel aux exemples donnés pour le premier mode de réalisation.

La valeur de bonus BS dans l'étape de détection 100 et selon la deuxième alternative, dans lequel le calculateur 4 initialise le score de confiance SC à une valeur de bonus BS, est avantageusement calculée de la même manière que dans l'étape de pondération 102 décrite ci-dessus, en fonction de caractéristiques intrinsèques 50 du capteur ayant détecté la première cible à filer 3 ou la nouvelle cible à filer 3, et d'au moins un parmi :

- l'environnement 51 du véhicule 1,
- des conditions atmosphériques 52,
- des caractéristiques 53 de la cible à filer 3.

Dans l'étape de pondération 102, et quel que soit le mode de réalisation, en cas de non détection par le capteur actif 2 de la cible à filer 3 et lorsque la non détection est prévisible par le calculateur 4 en fonction des caractéristiques intrinsèques 50 du capteur actif 2 et d'au moins un parmi :

- l'environnement 51 du véhicule 1,
- des conditions atmosphériques 52,
- des propriétés 53 de la cible à filer 3,

le coefficient de pondération CP est égal au seuil prédéterminé TH.

Quelques exemples sont donnés dans le tableau 4 ci-dessous pour illustration.

Tableau 4 :

| Type du capteur actif 2 | Environnement 51 du véhicule 1, ou/et conditions atmosphériques 52, ou/et propriétés 53 de la cible à filer 3. | Coefficient de pondération CP |
|---|---|---|
| Caméra | - La cible à filer 3 est occultée par une cible obstacle 10 ou un arbre | TH |
| Lidar | - La cible à filer 3 est occultée par une cible obstacle 10 ou un arbre | TH |

Le scénario classique d'une non détection prévisible par le calculateur 4 est le cas de l'occlusion de la cible à filer 3, par une cible obstacle 10, le plus couramment une automobile ou un camion, lorsque le capteur actif 2 est une caméra ou un lidar.

Selon le premier mode de réalisation de l'invention, le seuil prédéterminé TH est égal à zéro. Le coefficient de pondération CP est donc égal à zéro.

Un coefficient de pondération CP de zéro correspond à une probabilité de détection PD d'une cible à filer 3 égale à la probabilité de fausse détection PFA d'une cible à filer 3 et égale à 50%.

Avantageusement, le calculateur 4 attribue directement la valeur de zéro au coefficient de pondération CP de la cible à filer 3, dans le cas d'une non détection prévisible par le calculateur 4.

Un coefficient de pondération CP égal à zéro, permet de ne pas impacter le score de confiance SC de la cible à filer 3 qui est actualisé dans l'étape de cotation 103 à suivre.

Selon le deuxième mode de réalisation de l'invention, le seuil prédéterminé TH est égal à un. Le coefficient de pondération CP est donc égal à un.

Un coefficient de pondération CP égal à un, permet de ne pas impacter le score de confiance SC de la cible à filer 3 qui est actualisé dans l'étape de cotation 103 à suivre.

Dans l'étape de cotation 103 et selon l'un quelconque des modes de réalisation de l'invention, le calculateur 4 actualise le score de confiance SC de la cible à filer 3 en fonction du coefficient de pondération CP précédemment attribué.

Selon le premier mode de réalisation, le score de confiance SC de la cible à filer 3 est avantageusement actualisé en y additionnant le coefficient de pondération CP précédemment attribué.

On comprend donc le choix d'un seuil prédéterminé TH égal à zéro et le choix du coefficient de pondération CP égal au seuil prédéterminé TH dans le cas d'une occlusion de la cible, une actualisation du score de confiance SC avec l'addition d'un coefficient de pondération CP nul n'ayant aucun impact.

Aussi, pour diminuer l'impact sur le score de confiance SC, les bonus BS et malus MS sont abaissés en valeur absolue, se rapprochant ainsi de zéro, par rapport aux valeurs par défaut.

Selon le deuxième mode de réalisation, le seuil prédéterminé TH est égal à un.

Le score de confiance SC de la cible est avantageusement actualisé en y multipliant le coefficient de pondération CP précédemment attribué.

On comprend donc le choix d'un seuil prédéterminé TH égal à un et le choix du coefficient de pondération CP égal au seuil prédéterminé TH dans le cas d'une occlusion de la cible, une actualisation du score de confiance SC par une multiplication avec un coefficient de pondération CP égal à un, n'ayant aucun impact.

Aussi, pour diminuer l'impact sur le score de confiance SC, les bonus BS et malus MS sont rapprochés de la valeur 1, par rapport aux valeurs par défaut.

Quel que soit le mode de réalisation de l'invention, les étapes d'acquisition 101, de pondération 102 et de cotation 103 sont répétées dans le temps pour tous les capteurs 21, 22 aptes à détecter des cibles 3, 10 de l'environnement du véhicule 1, le score de confiance SC de la cible à filer 3 étant actualisé à chaque étape de cotation 103 en fonction du coefficient de pondération CP de la cible associé au capteur actif 2.

Avantageusement, les étapes de cotation 103 sont exécutées dans l'ordre chronologique des étapes d'acquisition 101 qui leur sont associées.

Par exemple, une caméra fait une acquisition de données à un temps T2, un radar fait une acquisition à un temps T3 postérieur au temps T2. Il est possible que calculateur 4 reçoive les informations de détection ou non détection de la cible à filer 3 envoyées par le radar avant les informations de détection ou non détection de la cible à filer 3 envoyées par la caméra, par exemple si le temps de traitement du radar est plus rapide que le temps de traitement de la caméra. Avantageusement, le calculateur 4 actualise tout d'abord le score de confiance SC de la cible à filer 3 par rapport au coefficient de pondération CP associé à la détection ou non détection de la cible à filer 3 par la caméra. Ensuite, le calculateur actualise le score de confiance de la cible par rapport au coefficient de pondération CP associé à la détection ou non détection de la cible à filer 3 par le radar.

De préférence, les informations associées aux cibles détectées, notamment les informations de détection ou non détection de la cible à filer 3, envoyées par le capteur actif 2 au calculateur 4, sont horodatées. Le calculateur 4 enregistre sur une période prédéterminée, les informations de détection ou non détection de la cible à filer 3, envoyées à l'issue de chaque étape d'acquisition 101 par le capteur actif 2. Avantageusement, chaque capteur 21, 22 de la pluralité de capteurs 21, 22 est au moins une fois un capteur actif 2 selon l'invention, pendant la période prédéterminée. Chaque capteur 21, 22 est un capteur actif 2 selon une fréquence fixe ou variable dans le temps.

Après écoulement de la période prédéterminée, le calculateur 4 exécute les étapes de pondération 102 et de cotation 103 dans l'ordre chronologique des étapes d'acquisition 101 en fonction de l'horodatage des informations de détection ou non détection de la cible à filer 3, enregistrées pendant ladite période prédéterminée.

Chaque étape de pondération 102 peut alternativement être exécutée après chaque étape d'acquisition 101. Dans ce cas, le calculateur 4 exécute les étapes de cotation 103 après écoulement de la période prédéterminée, dans l'ordre chronologique des étapes d'acquisition 101 en fonction de l'horodatage des informations de détection ou non détection de la cible à filer 3, enregistrées pendant ladite période prédéterminée.

Le procédé selon l'invention est applicable à plusieurs cibles à filer 3.

Une unique étape de détection 100 peut détecter plusieurs cibles à filer 3.

Au cours du temps, des étapes de détection 100 distinctes détectent de nouvelles cibles à filer 3.

Une cible détectée par un capteur actif 2 est généralement une cible à filer 3 mais également une cible obstacle 10 vis-à-vis d'une autre cible à filer 3.

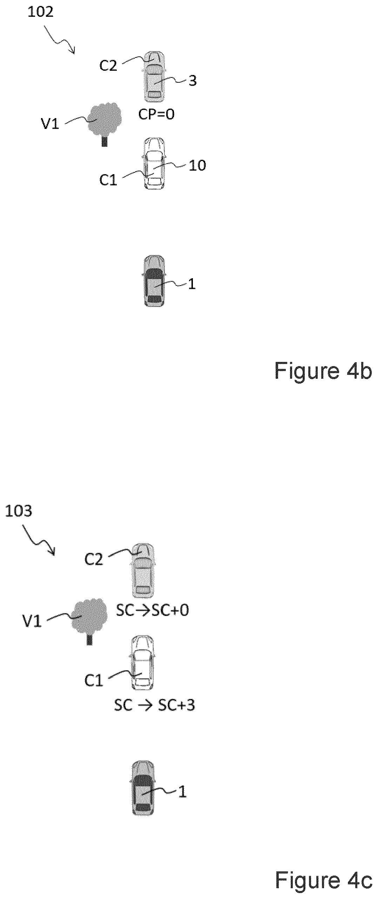

Par exemple, sur les figures 4a, 4b et 4c, le calculateur 4 du véhicule 1 a en mémoire :

- deux cibles : une première cible C1 et une deuxième cible C2
- un végétal V1 de l'environnement 51 du véhicule 1.

Le mode de réalisation de l'invention est le premier mode de réalisation.

Selon une étape d'acquisition 101, un capteur actif 2 détecte la première cible C1 et la deuxième cible C2 et envoi les informations de détection au calculateur 4.

Selon les caractéristiques intrinsèques 50 du capteur actif 2, le capteur actif 2 est de type caméra.

Comme illustré sur la figure 4a et selon une première exécution d'une étape de pondération 102, la cible à filer 3 est la première cible C1, la deuxième cible C2 étant une cible obstacle 10 de l'environnement 51 du véhicule 2. La cible obstacle 10 et le végétal V1 n'ont priori pas d'effet sur l'attribution à la cible à filer 3 du coefficient de pondération CP. L'environnement 51 du véhicule est standard, les conditions atmosphériques 52 sont standards, selon les propriétés 53 de la première cible C1, la cible à filer 3 n'est ni un piéton, ni un deux-roues, la cible à filer 3 est au centre du champ d'action de la caméra. Un coefficient de pondération, égal à un bonus BS standard de 3, est attribué à la première cible C1.

Comme illustré sur la figure 4b et selon une deuxième exécution d'une étape de pondération 102, la cible à filer 3 est la deuxième cible C2, la première cible C1 étant une cible obstacle 10 de l'environnement 51 du véhicule 2. Comme le capteur actif 2 est selon ses caractéristiques intrinsèques 50 une caméra, la non détection de la cible à filer 3 est prévisible car la première cible C1 occulte la deuxième cible C2. Selon le premier mode de réalisation de l'invention, le coefficient de pondération CP attribué par le calculateur 4 à la deuxième cible est zéro.

Comme illustré sur la figure 4c et selon une exécution d'une double étape de cotation 103 associée aux première et deuxième étapes de pondération 102, le score de confiance SC de la deuxième cible C2 est inchangé, le score de confiance SC de la première cible C1 est actualisé en y additionnant un coefficient de pondération CP égal à 3.

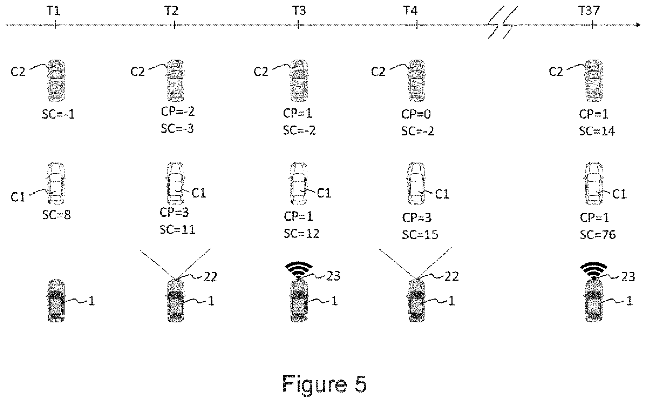

La figure 5 illustre l'évolution du score de confiance de la première cible C1 et de la deuxième cible C2 dans le temps, selon le premier mode de réalisation.

On suppose que l'environnement 51 du véhicule est standard, les conditions atmosphériques 52 sont standards. Selon les propriétés 53 de la première cible C1, la première cible C1 n'est ni un piéton, ni un deux-roues, la première cible C1 est au centre du champ d'action de la caméra. Selon les propriétés 53 de la deuxième cible C2, la deuxième cible C2 n'est ni un piéton, ni un deux-roues, la deuxième cible C2 est au centre du champ d'action de la caméra.

Au temps T1, on suppose que le procédé de l'invention a déjà été exécuté plusieurs fois et que la première cible C1 a un score de confiance SC égal à 8, la deuxième cible C2 a un score de confiance égal à -1.

Au temps T2, le procédé est exécuté avec pour cible à filer 3, la première cible C1 puis avec pour cible à filer 3, la deuxième cible C2. Le capteur actif 2 est un capteur 22 qui est une caméra. Le capteur actif 2 détecte la première cible C1 mais ne détecte pas la deuxième cible C2 parce que la deuxième cible C2 est occultée par la première cible C1. Le calculateur 4 n'a pas encore prévu la non détection la deuxième cible C2 par la caméra, par exemple parce-que la première cible C1 n'a pas encore été validée par le calculateur 4, son score de confiance SC n'ayant pas encore atteint ou dépassé un seuil de validation fixé par exemple à 12. Le calculateur 4 attribue à la première cible C1 un coefficient de pondération CP égal au bonus BS standard égal à 3. Le calculateur attribue à la deuxième cible C2 un coefficient de pondération CP égal au malus MS standard égal à -2. Le score de confiance SC de la première cible C1 est actualisé en y additionnant le bonus BS de 3, atteignant ainsi 11. Le score de confiance SC de la deuxième cible C2 est actualisé en y additionnant le malus MS de -2, s'abaissant alors -3.

Au temps T3, le procédé est exécuté avec pour cible à filer 3, la première cible C1 puis avec pour cible à filer 3, la deuxième cible C2. Le capteur actif 2 est un capteur 23 qui est un radar. Le capteur actif 2 détecte la première cible C1 et la deuxième cible C2. Le calculateur 4 attribue à la première cible C1 et à la deuxième cible C2 un coefficient de pondération CP égal au bonus BS standard égal à 1. Le score de confiance SC de la première cible C1 est actualisé en y additionnant le bonus BS de 1, atteignant ainsi 12. Le score de confiance SC de la deuxième cible C2 est actualisé en y additionnant le bonus BS de 1, remontant ainsi à -2.

Au temps T4, le procédé est exécuté avec pour cible à filer 3, la première cible C1 puis avec pour cible à filer 3, la deuxième cible C2. Le capteur actif 2 est de nouveau le capteur 22 qui est une caméra. Le capteur actif 2 détecte la première cible C1 mais ne détecte pas la deuxième cible C2 parce que la deuxième cible C2 est toujours occultée par la première cible C1. Le calculateur 4 a prévu la non détection la deuxième cible C2 par la caméra, le calculateur ayant maintenant validé la première cible C1 dont le score de confiance SC a atteint le seuil de validation, fixé à 12 dans l'exemple choisi. Le calculateur 4 attribue à la première cible C1 un coefficient de pondération CP égal au bonus BS standard égal à 3. Le calculateur 4 attribue à la deuxième cible C2 un coefficient de pondération CP nul, qui correspond à la valeur du coefficient de pondération CP dans le cas d'une non détection prévisible par le calculateur 4. Le score de confiance SC de la première cible C1 est actualisé en y additionnant le bonus BS de 3, atteignant ainsi 15. Le score de confiance SC de la deuxième cible C2 est actualisé en y additionnant coefficient de pondération CP nul, le score de confiance SC restant alors inchangé.

Au temps T37, éloigné du temps T4 par de nombreuses exécutions du procédé, le procédé est de nouveau exécuté avec pour cible à filer 3, la première cible C1 puis avec pour cible à filer 3, la deuxième cible C2. Le capteur actif 2 est le capteur 23 qui est un radar. Le capteur actif 2 détecte la première cible C1 et la deuxième cible C2. Le calculateur attribue à la première cible C1 et à la deuxième cible C2 un coefficient de pondération CP égal au bonus BS standard égal à 1. Le score de confiance SC de la première cible C1 est actualisé en y additionnant le bonus BS de 1, atteignant ainsi 76. Le score de confiance SC de la deuxième cible C2 est actualisé en y additionnant le bonus BS de 1, atteignant ainsi à 14. Le score de confiance SC de la première cible C1 est bien plus élevé que le score de confiance SC de la deuxième cible C2. C'est logique puisque les deux capteurs 22 et 23 détectent la deuxième cible C2, au contraire de la première cible C1 qui n'est détectée que par le capteur 23 qui est un radar.

Le procédé de l'invention, exécuté pour toutes les cibles 3, 10 de l'environnement, par tous les capteurs 21, 22 du véhicule 1 aptes à détecter des cibles et répété au cours du temps permet de déterminer un score de confiance SC robuste pour les cibles 3 de l'environnement.

Un système d'aide à la conduite pourra utiliser les scores de confiance SC attribués aux cibles selon le procédé de l'invention, pour aider un conducteur dans sa conduite ou pour prendre le contrôle du véhicule 1, de manière efficace, fiable et robuste.

Un système d'aide à la conduite pourra par exemple considérer uniquement les cibles dont le score de confiance SC est supérieur ou égal à un seuil de validation prédéterminé.

**Revendications**

1. Procédé de détermination d'un score de confiance (SC) d'une cible d'un environnement d'un véhicule (1), le véhicule (1) comprenant un calculateur (4) et une pluralité de capteurs (21, 22) aptes à détecter des cibles (3, 10) dudit environnement, le procédé comprenant les étapes suivantes :

   - une étape de détection (100) dans laquelle un capteur de la pluralité de capteurs (21, 22) détecte une cible à filer (3) et dans laquelle le calculateur (4) initialise un score de confiance (SC) de ladite cible à filer (3) à une valeur prédéterminée,
   - une étape d'acquisition (101) dans laquelle un capteur de la pluralité de capteurs (21, 22) dit capteur actif (2), acquiert des données pour détecter des cibles (3,10) de l'environnement et envoie au calculateur (4) des informations de détection associées aux cibles détectées en ne prenant pas en compte de précédentes acquisitions de données faites par le capteur actif (2), une absence d'envoi d'éléments sur la cible à filer (3) étant interprété par le calculateur (4) comme une information de non détection de la cible à filer (3),
   - une étape de pondération (102) dans laquelle le calculateur (4) attribue à la cible à filer (3) un coefficient de pondération (CP), en fonction de la détection ou de la non détection de la cible à filer (3) par le capteur actif (2), pondéré en fonction de caractéristiques intrinsèques (50) du capteur actif (2) et de l'environnement (21) du véhicule (1),
   - une étape de cotation (103) dans laquelle le calculateur (4) actualise le score de confiance (SC) de la cible à filer (3) en fonction du coefficient de pondération (CP) précédemment attribué.

2. Procédé selon l'une quelconque des revendications précédentes, les caractéristiques intrinsèques (50) du capteur actif (2) comprenant le type du capteur, un champ d'action du capteur.

3. Procédé selon l'une quelconque des revendications précédentes, l'environnement (51) du véhicule (1) comprenant d'autres cibles dites cibles obstacles (10), des objets de l'infrastructure d'une voie de circulation du véhicule, des végétaux.

4. Procédé selon l'une quelconque des revendications précédentes, le coefficient de pondération (CP) étant en outre pondéré, dans l'étape de pondération (102), en fonction des conditions atmosphériques (52) comprenant des conditions météorologiques et une luminosité.

5. Procédé selon l'une quelconque des revendications précédentes, le coefficient de pondération (CP) étant en outre pondéré, dans l'étape de pondération (102), en fonction de propriétés (53) de la cible à filer (3) comprenant une couleur, une distance au capteur actif (2), une localisation par rapport au capteur actif (2), une classe, une taille.

6. Procédé selon l'une quelconque des revendications précédentes, le score de confiance (SC) de la cible étant actualisé dans l'étape de cotation (103) en y additionnant le coefficient de pondération (CP) précédemment attribué.

7. Procédé selon l'une quelconque des revendications précédentes, dans lequel les étapes d'acquisition (101), de pondération (102) et de cotation (103) sont répétées dans le temps pour tous les capteurs (21, 22) aptes à détecter des cibles (3, 10) dudit environnement, le score de confiance (SC) de la cible à filer (3) étant actualisé à chaque étape de cotation (103) en fonction du coefficient de pondération (CP) de la cible associée au capteur actif (2).

8. Procédé selon l'une quelconque des revendications précédentes, le coefficient de pondération (CP) de la cible étant fonction d'une probabilité de détection (PD) de la cible à filer (3) et d'une probabilité de fausse détection (PFA) de la cible à filer (3).

9. Procédé selon l'une quelconque des revendications précédentes, le coefficient de pondération (CP) de la cible à filer (3) étant un bonus (BS) supérieur ou égal à un seuil prédéterminé (TH) en cas de détection de la cible à filer (3) par le capteur actif (2), le coefficient de pondération (CP) de la cible à filer étant un malus (MS) inférieur ou égal au seuil prédéterminé (TH) en cas de non détection de la cible à filer (3) par le capteur actif (2).

10. Procédé selon la revendication précédente, le coefficient de pondération (CP) de la cible à filer (3) étant égal au seuil prédéterminé (TH) en cas de non détection de la cible à filer (3) par le capteur actif (2), ladite non détection étant prévisible par le calculateur (4), en fonction de caractéristiques intrinsèques (50) du capteur actif (2) et de l'environnement (51) du véhicule (1).

11. Produit programme d'ordinateur comprenant les instructions de programme mettant en oeuvre au moins une étape du procédé selon l'une quelconque des revendications 1 à 10, lorsque les instructions de programme sont exécutées par un ordinateur.

**Patentansprüche**

1. Verfahren zur Bestimmung eines Konfidenzscores (SC) eines Ziels eines Umfelds eines Fahrzeugs (1), wobei das Fahrzeug (1) einen Rechner (4) und eine Mehrzahl von Sensoren (21, 22), die geeignet sind, Ziele (3, 10) des Umfelds zu detektieren, umfasst, wobei das Verfahren die folgenden Schritte umfasst:

   - einen Detektionsschritt (100), in dem ein Sensor der Mehrzahl von Sensoren (21, 22) ein zu verfolgendes Ziel (3) detektiert und in dem der Rechner (4) einen Konfidenzscore (SC) des zu verfolgenden Ziels (3) auf einen vorbestimmten Wert initialisiert,
   - einen Erfassungsschritt (101), in dem ein Sensor der Mehrzahl von Sensoren (21, 22), aktiver Sensor (2) genannt, Daten erfasst, um Ziele (3, 10) des Umfelds zu detektieren, und an den Rechner (4) Detektionsinformationen sendet, die den detektierten Zielen zugeordnet sind, wobei vorhergehende Erfassungen von Daten durch den aktiven Sensor (2) nicht berücksichtigt werden, wobei ein Nichtsenden von Elementen zu dem zu verfolgenden Ziel (3) von dem Rechner (4) als eine Nichtdetektionsinformation des zu verfolgenden Ziels (3) interpretiert wird,
   - einen Gewichtungsschritt (102), in dem der Rechner (4) dem zu verfolgenden Ziel (3) einen Gewichtungskoeffizienten (CP) in Abhängigkeit von der Detektion oder der Nichtdetektion des zu verfolgenden Ziels (3) durch den aktiven Sensor (2) zuweist, der in Abhängigkeit von intrinsischen Merkmalen (50) des aktiven Sensors (2) und des Umfelds (21) des Fahrzeugs (1) gewichtet ist,
   - einen Bewertungsschritt (103), in dem der Rechner (4) den Konfidenzscore (SC) des zu verfolgenden Ziels (3) in Abhängigkeit von dem zuvor zugewiesenen Gewichtungskoeffizienten (CP) aktualisiert.

2. Verfahren nach einem der vorhergehenden Ansprüche, wobei die intrinsischen Merkmale (50) des aktiven Sensors (2) den Typ des Sensors, einen Aktionsbereich des Sensors umfassen.

3. Verfahren nach einem der vorhergehenden Ansprüche, wobei das Umfeld (51) des Fahrzeugs (1) weitere Ziele, Hindernisziele (10) genannt, Objekte der Infrastruktur einer Fahrspur des Fahrzeugs, Pflanzen umfasst.

4. Verfahren nach einem der vorhergehenden Ansprüche, wobei der Gewichtungskoeffizient (CP) ferner, in dem Gewichtungsschritt (102), in Abhängigkeit von den atmosphärischen Bedingungen (52) gewichtet wird, die meteorologische Bedingungen und eine Helligkeit umfassen.

5. Verfahren nach einem der vorhergehenden Ansprüche, wobei der Gewichtungskoeffizient (CP) ferner, in dem Gewichtungsschritt (102), in Abhängigkeit von Eigenschaften (53) des zu verfolgenden Ziels (3) gewichtet wird, die eine Farbe, eine Entfernung von dem aktiven Sensor (2), eine Lage in Bezug auf den aktiven Sensor (2), eine Klasse, eine Größe umfassen.

6. Verfahren nach einem der vorhergehenden Ansprüche, wobei der Konfidenzscore (SC) des Ziels in dem Bewertungsschritt (103) aktualisiert wird, indem der zuvor zugewiesene Gewichtungskoeffizient (CP) dazu addiert wird.

7. Verfahren nach einem der vorhergehenden Ansprüche, wobei die Erfassungs- (101), Gewichtungs- (102) und Bewertungsschritte (103) im Laufe der Zeit für alle Sensoren (21, 22) wiederholt werden, die geeignet sind, Ziele (3, 10) des Umfelds zu detektieren, wobei der Konfidenzscore (SC) des zu verfolgenden Ziels (3) bei jedem Bewertungsschritt (103) in Abhängigkeit von dem Gewichtungskoeffizienten (CP) des dem aktiven Sensor (2) zugeordneten Ziels aktualisiert wird.

8. Verfahren nach einem der vorhergehenden Ansprüche, wobei der Gewichtungskoeffizient (CP) des Ziels von einer Detektionswahrscheinlichkeit (PD) des zu verfolgenden Ziels (3) und von einer Falschdetektionswahrscheinlichkeit (PFA) des zu verfolgenden Ziels (3) abhängig ist.

9. Verfahren nach einem der vorhergehenden Ansprüche, wobei der Gewichtungskoeffizient (CP) des zu verfolgenden Ziels (3) im Fall einer Detektion des zu verfolgenden Ziels (3) durch den aktiven Sensor (2) ein Bonus (BS) größer oder gleich einem vorbestimmten Schwellenwert (TH) ist, wobei der Gewichtungskoeffizient (CP) des zu verfolgenden Ziels im Fall der Nichtdetektion des zu verfolgenden Ziels (3) durch den aktiven Sensor (2) ein Malus kleiner oder gleich dem vorbestimmten Schwellenwert (TH) ist.

10. Verfahren nach dem vorhergehenden Anspruch, wobei der Gewichtungskoeffizient (CP) des zu verfolgenden Ziels (3) im Fall der Nichtdetektion des zu verfolgenden Ziels (3) durch den aktiven Sensor (2) gleich dem vorbestimmten Schwellenwert (TH) ist, wobei die Nichtdetektion von dem Rechner (4) in Abhängigkeit von intrinsischen Merkmalen (50) des aktiven Sensors (2) und von dem Umfeld (51) des Fahrzeugs (1) vorhergesehen werden kann.

11. Computerprogrammprodukt, das Programmanweisungen umfasst, die bei der Ausführung der Programmanweisungen durch einen Computer mindestens einen Schritt des Verfahrens nach einem der Ansprüche 1 bis 10 ausführen.


**Claims**

1. Method for determining a confidence score (SC) of a target in an environment of a vehicle (1), the vehicle (1) comprising a computer (4) and a plurality of sensors (21, 22) capable of detecting targets (3, 10) in said environment, the method comprising the following steps:

   - a detection step (100) in which a sensor of the plurality of sensors (21, 22) detects a target (3) to be tailed and in which the computer (4) initializes a confidence score (SC) for said target (3) to be tailed at a predetermined value,
   - an acquisition step (101) in which a sensor of the plurality of sensors (21, 22), called active sensor (2), acquires data for detecting targets (3, 10) in the environment and sends the computer (4) detection information associated with the detected targets that does not take account of preceding data acquisitions made by the active sensor (2), an absence of sending elements on the target (3) to be tailed being interpreted by the computer (4) as information on non-detection of the target (3) to be tailed,
   - a weighting step (102) in which the computer (4) assigns the target (3) to be tailed a weighting coefficient (CP), as a function of the detection or of the non-detection of the target (3) to be tailed by the active sensor (2), weighted as a function of intrinsic characteristics (50) of the active sensor (2) and of the environment (21) of the vehicle (1),
   - a scoring step (103) in which the computer (4) updates the confidence score (SC) of the target (3) to be tailed as a function of the weighting coefficient (CP) previously assigned.

2. Method according to any one of the preceding claims, the intrinsic characteristics (50) of the active sensor (2) comprising the type of the sensor, a field of action of the sensor.

3. Method according to either one of the preceding claims, the environment (51) of the vehicle (1) comprising other targets, called obstacle targets (10), objects of the infrastructure of a traffic lane of the vehicle, vegetation.

4. Method according to any one of the preceding claims, the weighting coefficient (CP) being further weighted, in the weighting step (102), as a function of the atmospheric conditions (52) comprising the weather conditions and brightness.

5. Method according to any one of the preceding claims, the weighting coefficient (CP) being further weighted, in the weighting step (102), as a function of the properties (53) of the target (3) to be tailed comprising a colour, a distance to the active sensor (2), a location with respect to the active sensor (2), a class, a size.

6. Method according to any one of the preceding claims, the confidence score (SC) of the target being updated in the scoring step (103) by adding to it the weighting coefficient (CP) previously assigned.

7. Method according to any one of the preceding claims, wherein the acquisition (101), weighting (102) and scoring (103) steps are repeated in time for all the sensors (21, 22) capable of detecting targets (3, 10) in said environment, the confidence score (SC) of the target (3) to be tailed being updated on each scoring step (103) as a function of the weighting coefficient (CP) of the target associated with the active sensor (2).

8. Method according to any one of the preceding claims, the weighting coefficient (CP) of the target being a function of a probability of detection (PD) of the target (3) to be tailed and of a probability of false detection (PFA) of the target (3) to be tailed.

9. Method according to any one of the preceding claims, the weighting coefficient (CP) of the target (3) to be tailed being a bonus (BS) greater than or equal to a predetermined threshold (TH) in case of detection of the target (3) to be tailed by the active sensor (2), the weighting coefficient (CP) of the target to be tailed being a penalty (MS) less than or equal to the predetermined threshold (TH) in case of non-detection of the target (3) to be tailed by the active sensor (2).

10. Method according to the preceding claim, the weighting coefficient (CP) of the target (3) to be tailed being equal to the predetermined threshold (TH) in case of non-detection of the target (3) to be tailed by the active sensor (2), said non-detection being able to be predicted by the computer (4), as a function of intrinsic characteristics (50) of the active sensor (2) and of the environment (51) of the vehicle (1).

11. Computer program product comprising program instructions implementing at least one step of the method according to any one of Claims 1 to 10, when the program instructions are executed by a computer.

Figure 1

Figure 2

60%

d3

70%

d2

16

80%

16

d1

15

15

95%

70%

70%

2

1

Figure 3

102

C2

10

V1

C1

3

CP=BS=3

1

Figure 4a

102

C2

3

V1

CP=0

C1

10

1

Figure 4b

103

C2

V1

SC→SC+0

C1

SC → SC+3

1

Figure 4c

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018349785 A1

**Littérature non-brevet citée dans la description**

- **ALLDIECK, THIEMO** ; **CHRIS H. BAHNSEN** ; **THOMAS B. MOESLUND**. Context-aware fusion of RGB and thermal imagery for traffic monitoring. *Sensors*, 2016, vol. 16 (11)